# EUROPÄISCHE PATENTANMELDUNG

(11) **EP 0 882 545 A2**
(43) Veröffentlichungstag der Anmeldung: **09.12.1998**
(21) Anmeldenummer: 98107906.4
(22) Anmeldetag: 30.04.1998
(51) Int. Cl.: B23P 6/00, F01D 9/04

(54) **Verfahren zum Reparieren von integral gegossenen Leitkränzen einer Turbine**

(30) Priorität: 05.06.1997 DE 19723595
(71) Anmelder: MTU MOTOREN- UND TURBINEN-UNION MÜNCHEN GMBH, 80976 München (DE)
(72) Erfinder: Meier, Reinhold, 84405 Dorfen (DE)

(57) **Zusammenfassung**

Es wird ein Verfahren zum Reparieren eines integralen Leitkranzes (1), der ein inneres Deckband (2), ein äußeres Deckband (3) und zwischen den beiden Deckbändern (2, 3) angeordnete Schaufelblätter (4) aufweist, beschrieben, wobei das beschädigte Schaufelblatt (4) unter Herstellung der Kontur erster Teile (6, 6') von komplementären formschlüssigen Verbindungen (5, 5') aus dem Leitkranz (1) herausgetrennt wird, ein Ersatzschaufelblatt (4') mit der Kontur zweiter Teile (7, 7') der komplementären formschlüssigen Verbindungen (5, 5') hergestellt und das Ersatzschaufelblatt (4') anstelle des beschädigten Schaufelblattes in den Leitkranz (1) eingesetzt wird.

## Beschreibung

Die Erfindung betrifft ein Verfahren zum Reparieren von integralen Leitkränzen einer Turbomaschine durch Erneuern beschädigter Schaufelblätter, wobei der Leitkranz ein inneres Deckband, ein äußeres Deckband und zwischen den beiden Deckbändern angeordnete Schaufelblätter aufweist.

Die Leitkränze von Turbinen und Verdichtern, insbesondere von Turbostrahltriebwerken sind im Betrieb durch Heißgasströmung, Thermoermüdung, Korrosion und Oxydation stark beansprucht, wobei insbesondere die Schaufelblätter stark belastet werden. Bei einem integralen Leitkranz bedeutet die Beschädigung eines einzelnen Schaufelblattes, daß der ganze Leitkranz unbrauchbar ist.

Nach dem Stand der Technik werden integrale oder integral gegossene Leitkränze von Turbinen repariert, indem die beschädigten oder fehlenden Schaufelblätter durch Auftragschweißen und Nachprofilieren wieder aufgebaut oder durch Einschweißen ganzer Schaufelblattbereiche wiederhergestellt werden. Die Schwierigkeiten dieser Art der Instandsetzung liegen dabei in den oft schwer zu schweißenden Superlegierungen, den nach der Reparatur im Leitkranz verbleibenden Restspannungen, sowie in den aufwendigen manuellen Profilierprozessen.

Die Aufgabe der Erfindung ist es daher, ein Verfahren zum Reparieren von integralen Leitkränzen von Turbomaschinen anzugeben, mit dem der Leitkranz mit geringerem Aufwand repariert werden kann.

Diese Aufgabe wird erfindungsgemäß durch ein Verfahren mit den Merkmalen des Anspruchs 1 gelöst.

Gemäß der Erfindung sind bei einem Verfahren zum Reparieren von integralen Leitkränzen einer Turbomaschine durch Erneuern beschädigter Schaufelblätter, wobei der Leitkranz ein inneres Deckband, ein äußeres Deckband und zwischen den beiden Deckbändern angeordnete Schaufelblätter aufweist, die folgenden Verfahrensschritte vorgesehen:
a) Heraustrennen des beschädigten Schaufelblattes aus dem Leitkranz, wobei im Profil des Schaufelblattes, im inneren Deckband und/oder im äußeren Deckband die Kontur eines Teils einer formschlüssigen Verbindung mit komplementären Teilen herausgearbeitet wird;
b) Herstellen eines Ersatzschaufelblattes mit der Kontur des anderen Teils der formschlüssigen Verbindung; und
c) Einsetzen des Ersatzschaufelblattes anstelle des beschädigten Schaufelblattes in den Leitkranz.

Ein Vorteil der Erfindung ist es, daß die Instandsetzung des Leitkranzes, bespielsweise eines Verdichters oder einer Turbine ohne Schweißen vorgenommen werden kann. Dadurch entfallen die mit dem Schweißen von Superlegierungen verbundenen Schwierigkeiten, sowie die Möglichkeit des Auftretens von Restspannungen. Ein weiterer Vorteil des erfindungsgemäßen Verfahrens ist es, daß aufwendige Profilierprozesse unnötig sind.

Vorteilhafterweise erfolgt das Herstellen des Ersatzschaufelblattes durch Heraustrennen eines intakten Schaufelblattes aus einem gleichen Leitkranz. Dies hat den Vorteil, daß einerseits die Geometrie und Beschaffenheit der Schaufelblätter gleich ist und zum anderen, daß bei der Bearbeitung des zu reparierenden Leitkranzes und des zum Heraustrennen der Schaufelblätter verwendeten Leitkranzes gleiche Werkzeuge, Einspannvorrichtungen etc. verwendet werden können.

Vorteilhafterweise erfolgt das Heraustrennen des beschädigten Schaufelblattes aus dem zu reparierenden Leitkranz und/oder das Herausarbeiten der Kontur des einen Teils der formschlüssigen Verbindung mittels Drahterosion. Ebenso erfolgt vorteilhafterweise auch das Heraustrennen des Ersatzschaufelblattes aus dem dazu verwendeten Leitkranz und/oder das Herausarbeiten der Kontur des anderen Teils der formschlüssigen Verbindung mittels Drahterosion. Die Verwendung der Drahterosion hat den Vorteil, daß die zum Herstellen einer formschlüssigen Verbindung verwendeten Schnittvorgänge mit großer Präzision und auch mit dreidimensionaler Schnittführung vorgenommen werden können.

Das Heraustrennen des beschädigten Schaufelblattes sowie des Ersatzschaufelblattes und/oder das Herausarbeiten der Kontur der Teile der formschlüssigen Verbindung erfolgt vorzugsweise unter numerischer Steuerung, wobei zum Herausarbeiten jeweils komplementärer Teile der formschlüssigen Verbindung die gleiche Kontur unter Korrektur der Schnittspaltbreite verwendet wird.

Vorzugsweise wird die formschlüssige Verbindung in Form einer Schwalbenschwanzverbindung hergestellt.

Von Vorteil ist es, die formschlüssige Verbindung in einer Weise herzustellen, die das Einschieben des Ersatzschaufelblattes in einer Richtung im wesentlichen senkrecht zur Ebene des Schaufelblattes gestattet.

Alternativ ist es auch von Vorteil, die formschlüssige Verbindung in der Weise herzustellen, daß das Einschieben des Ersatzschaufelblattes in einer Richtung im wesentlichen parallel zur Ebene des Schaufelblattes gestattet ist.

Gemäß einer besonders vorteilhaften Weiterbildung des erfindungsgemäßen Verfahrens wird die formschlüssige Verbindung so hergestellt, daß sich die Abmessung des Ersatzschaufelblattes mit Einschieberichtung verjüngt, so daß sich das Ersatzschaufelblatt in der formschlüssigen Verbindung verkeilt. Hierdurch wird das Ersatzschaufelblatt allein schon durch die Ausbildung der formschlüssigen Verbindung in dem Leitkranz festgelegt.

Vorzugsweise wird die Abmessung des Ersatzschaufelblattes so gewählt, daß sich das Ersatzschaufelblatt durch Längendehnung bei Erwärmung zwischen dem inneren Deckband und dem äußeren Deckband klemmt. Dies hat den Vorteil, daß ein Lockern oder Lösen des Ersatzschaufelblattes während des Betriebs der Turbine gänzlich unmöglich wird.

Vorzugsweise ist die Einschieberichtung des Ersatzschaufelblattes bezüglich der Gasströmung durch den Leitkranz so orientiert, daß das Verkeilen des Ersatzschaufelblattes durch die Gasströmung unterstützt wird. Dies ist insbesondere von Vorteil in Kombination mit einer oder jeder der beiden vorher genannten Maßnahmen, nämlich der Verjüngung des Ersatzschaufelblattes mit Einschieberichtung und/oder der Bemessung des Ersatzschaufelblattes so, daß es sich bei Längendehnung durch Erwärmung selbständig in den Leitkranz klemmt.

Zusätzlich kann das Ersatzschaufelblatt durch Löten oder Schweißen in dem Leitkranz gesichert werden.

Wird das Ersatzschaufelblatt durch Löten gesichert, so ist es für eine gleichmäßige Verteilung des Lotgutes von Vorteil, die Kontaktstellen der formschlüssigen Erfindung mit Lotgut zu beschichten. Somit kann eine homogene Lötverbindung des Ersatzschaufelblattes mit dem anschließenden Deckband sichergestellt werden. Für eine gleichmäßige Beschichtung der zu verlötenden Kontaktstellen hat sich eine Beschichtung nach dem PVD-Verfahren als vorteilhaft herausgestellt. Hierbei kommt sowohl ein Ionenplattieren, Kathodenzerstäuben oder Aufdampfen im Vakuum in Betracht. Vorzugsweise wird dabei das Lotgut in einer Schichtdicke aufgetragen, so daß sich ein Preßsitz in der formschlüssigen Verbindung ergibt. Somit wird ein ausreichender Lotüberschuß für den Lotvorgang sichergestellt. Durch Kapillarwirkung fließt das erhitzte Lot auch in die kleinsten Fugen der formschlüssigen Verbindung und gewährleistet somit eine betriebssichere Lotverbindung.

Im folgenden werden Ausführungsbeispiele des erfindungsgemäßen Verfahrens anhand der Zeichnung erläutert.

Es zeigen:
- Fig. 1: in perspektivischer Darstellung eine Ansicht eines integral gegossenen Leitkranzes mit reparaturbedürftigen Schaufeln;
- Fig. 2a): in mit I) bis V) bezeichneten Teilbildern eine Abfolge von Arbeitsvorgängen beim Reparieren eines Schaufelblattes eines integralen Leitkranzes gemäß einem Ausführungsbeispiel der Erfindung;
- Fig. 2b): eine Schnittansicht durch ein verwendetes Ersatzschaufelblatt entlang der Linie B-B in Fig. 2a), Teilbild IV); und
- Fig. 3: in perspektivischer Darstellung einen Teil eines integralen Leitkranzes mit einem entsprechend einem weiteren Ausführungsbeispiel des erfindungsgemäßen Verfahrens reparierten Schaufelblatt.

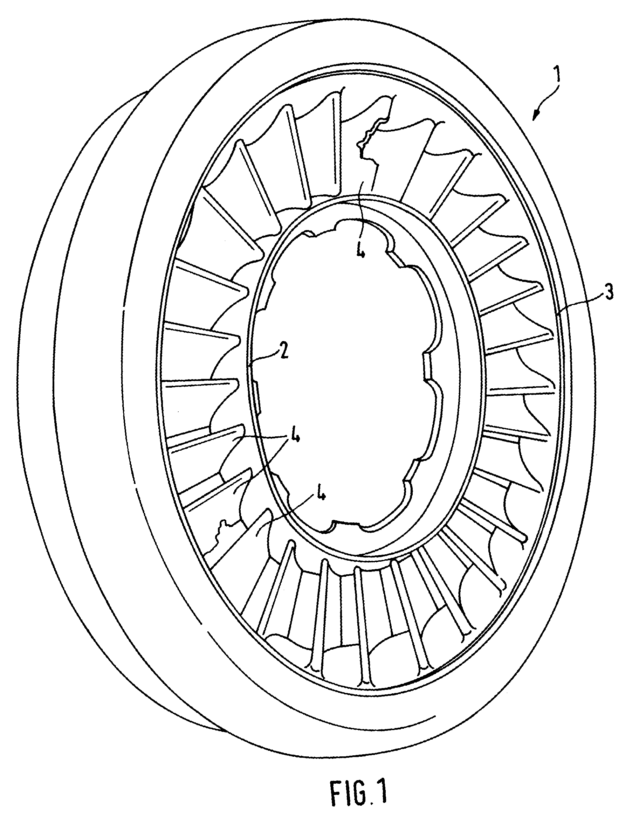

Fig. 1 zeigt in perspektivischer Darstellung einen integralen Leitkranz 1 einer Turbine, beispielsweise eines Turbostrahltriebwerks, der aber z. B. auch Teil des Verdichters sein kann. Der Leitkranz 1 umfaßt ein inneres Deckband 2 und ein äußeres Deckband 3, zwischen denen in radialer Richtung verlaufende Schaufelblätter 4 angeordnet sind. Diese Schaufelblätter 4 weisen zur Führung des durch den Leitkranz 1 verlaufenden Gasstroms der Turbine eine konkav-konvexe Profilierung auf.

Aufgrund der hohen thermischen Belastung beim Betrieb der Turbine durch Heißgassträhnen, Thermoermüdung, Korrosion und Oxidation etc. sind die Schaufelblätter 4 einem Verschleiß ausgesetzt, wie er an zwei Schaufelblättern 4 des Leitkranzes 1 in Fig. 1 dargestellt ist. Wie gezeigt, können die Schäden sowohl an der stromaufwärtigen Seite wie auch an der stromabwärtigen Seite eines Schaufelblattes 4 auftreten.

Die Fig. 2a) und 2b) zeigen in mehreren Arbeitsgängen das Vorgehen bei einem Verfahren zum Reparieren eines integralen Leitkranzes einer Turbomaschine, wie er in Fig. 1 gezeigt ist. Zunächst wird das beschädigte Schaufelblatt 4 aus dem Leitkranz 1 herausgetrennt, wobei bei dem gezeigten Ausführungsbeispiel die Schnittführung im profilierten Teil des Schaufelblattes 4 erfolgt (Teilbilder I) und II)). Dann wird mittels einer geeigneten Schnittechnik, vorzugsweise mittels Drahterosion aus den stehengebliebenen Stümpfen des Schaufelblattes 4 die Kontur eines ersten Teils 6 bzw. 6' von Teilen einer formschlüssigen Verbindung herausgearbeitet (Teilbild III)). Die Art der formschlüssigen Verbindung ist aus den Teilbildern III) bis V) der Fig. 2a) ersichtlich, wo die formschlüssige Verbindung mit dem Bezugszeichen 5, 5' bezeichnet ist. Die formschlüssigen Verbindungen 5, 5' enthalten jeweils komplementäre formschlüssig genau ineinanderpassende Teile 6, 7 der einen Verbindung 5 und 6', 7' der anderen Verbindung 5'.

Dann wird ein Ersatzschaufelblatt 4' hergestellt, das an seinen Enden die Kontur der anderen Teile 7, 7' der komplementären formschlüssigen Verbindungen 5, 5' aufweist. Dieses Ersatzschaufelblatt 4' wird nun zwischen die stehengebliebenen Stümpfe des ursprünglichen, beschädigten Schaufelblattes eingesetzt (Teilbild IV)). Wenn das Ersatzschaufelblatt 4' eingesetzt ist, ist das Schaufelblatt wieder in seiner ursprünglichen Form hergestellt (Teilbild V)).

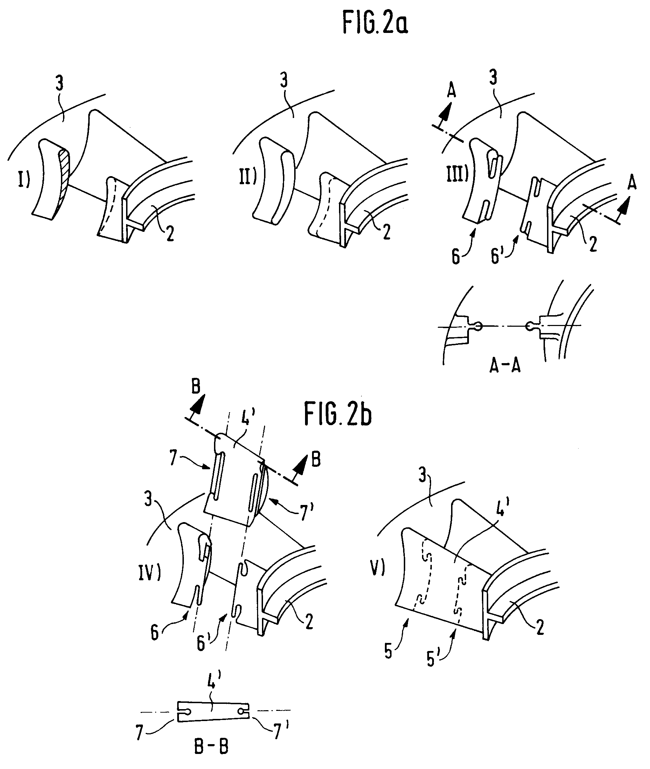

Wie Fig. 2b) zeigt, sind die Teile 7, 7' der formschlüssigen Verbindungen 5, 5' bei dem gezeigten Ausführungsbeispiel in Form einer Schwalbenschwanzverbindung hergestellt, mittels der das Ersatzschaufelblatt 4' formschlüssig fest und stabil eingebunden ist.

Das Ersatzschaufelblatt 4', welches für die Reparatur verwendet wird, wird bei dem erläuterten Ausführungsbeispiel vorzugsweise dadurch hergestellt, daß ein intaktes Schaufelblatt aus einem Leitkranz herausgetrennt wird, welcher dem zu reparierenden Leitkranz 1 gleicht. Hierdurch kann das Ersatzschaufelblatt 4' auf einfache Weise hergestellt werden, wobei sowohl für die Reparatur des beschädigten Leitkranzes 1 als auch für das Heraustrennen des Ersatzschaufelblatts 4' aus dem dazu dienenden Leitkranz die gleichen Werkzeuge, insbesondere Einspannvorrichtungen etc. verwendet werden können.

Das Herausarbeiten der Kontur des ersten Teils 6, 6' der formschlüssigen Verbindungen 5, 5' aus den Stümpfen des zu reparierenden Leitkranzes 1 beim Heraustrennen des beschädigten Schaufelblattes 4 erfolgt bei dem beschriebenen Ausführungsbeispiel mittels Drahterosion. Ebenso erfolgt die Formgebung der Kontur des anderen Teils 7, 7' der komplementären formschlüssigen Verbindungen 5, 5' aus dem Ersatzschaufelblatt 4' mittels Drahterosion. Das Heraustrennen des beschädigten Schaufelblattes 4 wie auch des Ersatzschaufelblattes 4' bzw. das Herausarbeiten der Konturen der Teile 6, 6', 7, 7' der formschlüssigen Verbindungen 5, 5' wird unter numerischer Steuerung vorgenommen, wobei für das Herausarbeiten der Kontur der Teile 6 und 7 der einen formschlüssigen Verbindung 5 unter Korrektur der Schnittspaltbreite die gleiche Kontur verwendet wird, ebenso für das Herausarbeiten der Teile 6', 7' der anderen formschlüssigen Verbindung 5'.
Die formschlüssigen Verbindungen 5, 5' werden bei dem anhand der Fig. 2a) und 2b) erläuterten Ausführungsbeispiel der Erfindung in der Weise hergestellt, daß das Einschieben des Ersatzschaufelblattes 4' in einer Richtung B senkrecht zur Ebene des Schaufelblattes erfolgt.

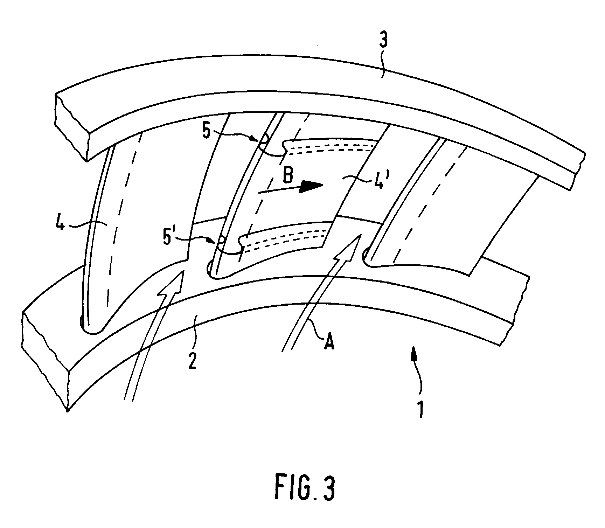

Gemäß einem weiteren Ausführungsbeispiel der Erfindung, das anhand der Fig. 3 erläutert wird, werden die formschlüssigen Verbindungen 5, 5' so hergestellt, daß ein Einschieben des Ersatzschaufelblattes 4' in einer Richtung B' parallel zur Ebene des Schaufelblattes bzw. zum Verlauf der formschlüssigen Verbindungen 5, 5' möglich ist.

Der Verlauf der formschlüssigen Verbindungen 5, 5' wird bei beiden Ausführungsbeispielen so gewählt, daß sich die Abmessung des Ersatzschaufelblattes 4' mit Einschieberichtung B bzw. B' verjüngt, so daß sich das Ersatzschaufelblatt 4' zwischen den formschlüssigen Verbindungen 5, 5' verkeilt. Das bedeutet, die Teile 7, 7' an den Enden des Ersatzschaufelblattes 4' erfahren bei zunehmendem Einschieben in Richtung B bzw. B' eine zunehmende Kraft durch die Teile 6, 6' an den stehengebliebenen Stümpfen des zu reparierenden Schaufelblattes.

Weiterhin ist die Abmessung des Ersatzschaufelblattes 4' so gewählt, daß sich dieses bei Erwärmung des Leitkranzes 1 und damit insbesondere der Schaufelblätter aufgrund Längendehnung zwischen dem inneren Deckband 2 und dem äußeren Deckband 3 klemmt, das heißt, daß die von den Teilen 6, 6' an den stehengebliebenen Stümpfen des zu reparierenden Schaufelblattes 4 auf die Teile 7, 7' des Ersatzschaufelblattes 4' wirkenden Kräfte zunehmen.

Die Einschieberichtung B bzw. B' ist bezüglich der Gasströmung A durch den Leitkranz 1 so orientiert, daß das Verkeilen des Ersatzschaufelblattes 4' durch die Gasströmung unterstützt wird. Das heißt, je größer die strömungsdynamische Belastung des Ersatzschaufelblattes ist, umso stärker wird dieses durch die formschlüssige Verbindung 5, 5' eingekeilt, so daß ein Lösen unmöglich ist.

Als zusätzliche Maßnahme kann das Ersatzschaufelblatt 4' durch Löten oder Schweißen im Bereich der formschlüssigen Verbindung 5, 5' zusätzlich gesichert werden.

## Patentansprüche

1. Verfahren zum Reparieren von integralen Leitkränzen einer Turbomaschine durch Erneuern beschädigter Schaufelblätter, wobei der Leitkranz (1) ein inneres Deckband (2), ein äußeres Deckband (3) und zwischen den beiden Deckbändern (2, 3) angeordnete Schaufelblätter (4) aufweist, gekennzeichnet durch die Verfahrensschritte
a) Heraustrennen des beschädigten Schaufelblattes (4) aus dem Leitkranz (1), wobei im Profil des Schaufelblattes (4), im inneren Deckband (2) und/oder im äußeren Deckband (3) die Kontur eines Teils (6, 6')einer formschlüssigen Verbindung (5, 5') mit komplementären Teilen (6, 6', 7, 7') herausgearbeitet wird;
b) Herstellen eines Ersatzschaufelblattes (4') mit der Kontur des anderen Teils (7, 7') der komplementären formschlüssigen Verbindung (5, 5'); und
c) Einsetzen des Ersatzschaufelblattes (4') anstelle des beschädigten Schaufelblattes in den Leitkranz (1).

2. Verfahren nach Anspruch 1, dadurch gekennzeichnet, daß das Herstellen des Ersatzschaufelblattes (4') durch Heraustrennen eines intakten Schaufelblattes aus einem gleichen Leitkranz erfolgt.

3. Verfahren nach Anspruch 1 oder 2, dadurch gekennzeichnet, daß das Heraustrennen des beschädigten Schaufelblattes (4) aus dem Leitkranz (1) und/oder das Herausarbeiten der Kontur des einen Teils (6, 6') der formschlüssigen Verbindung (5, 5') mittels Drahterosion erfolgt.

4. Verfahren nach Anspruch 2 oder 3, dadurch gekennzeichnet, daß das Heraustrennen des Ersatzschaufelblattes (4') aus dem Leitkranz und/oder das Herausarbeiten der Kontur des anderen Teils (7, 7') der formschlüssigen Verbindung (5, 5') mittels Drahterosion erfolgt.

5. Verfahren nach Anspruch 2, 3 oder 4, dadurch gekennzeichnet, daß das Heraustrennen des beschädigten Schaufelblattes (4) sowie des Ersatzschaufelblattes (4') und/oder das Herausarbeiten der Kontur der Teile (6, 6', 7, 7') der formschlüssigen Verbindung (5, 5') unter numerischer Steuerung erfolgt, wobei zum Herausarbeiten jeweils komplementärer Teile (6, 7 bzw. 6', 7') der formschlüssigen Verbindung (5, 5') die gleiche Kontur unter Korrektur der Schnittspaltbreite verwendet wird.

6. Verfahren nach einem der Ansprüche 1 bis 5, dadurch gekennzeichnet, daß die komplementäre formschlüssige Verbindung (5, 5') in Form einer Schwalbenschwanzverbindung hergestellt wird.

7. Verfahren nach einem der Ansprüche 1 bis 6, dadurch gekennzeichnet, daß die formschlüssige Verbindung (5, 5') in einer Weise hergestellt wird, die das Einschieben des Ersatzschaufelblattes (4') in einer Richtung (B) im wesentlichen senkrecht zur Ebene des Schaufelblattes gestattet.

8. Verfahren nach einem der Ansprüche 1 bis 6, dadurch gekennzeichnet, daß die formschlüssige Verbindung (5, 5') in einer Weise hergestellt wird, die das Einschieben des Ersatzschaufelblattes (4') in einer Richtung (B') parallel zur Ebene des Schaufelblattes gestattet.

9. Verfahren nach Anspruch 7 oder 8, dadurch gekennzeichnet, daß die formschlüssige Verbindung (5, 5') so hergestellt wird, daß sich die Abmessung des Ersatzschaufelblattes (4') mit Einschieberichtung (B, B') verjüngt, so daß sich das Ersatzschaufelblatt (4') in der formschlüssigen Verbindung (5, 5') verkeilt.

10. Verfahren nach einem der Ansprüche 1 bis 9, dadurch gekennzeichnet, daß die Abmessung des Ersatzschaufelblattes (4') so gewählt ist, daß sich das Ersatzschaufelblatt (4') durch Längendehnung bei Erwärmung zwischen dem inneren Deckband (2) und dem äußeren Deckband (3) klemmt.

11. Verfahren nach Anspruch 8, 9 oder 10, dadurch gekennzeichnet, daß die Einschieberichtung (B, B') bezüglich der Gasströmung durch den Leitkranz (1) so orientiert ist, daß das Verkeilen des Ersatzschaufelblattes (4') durch die Gasströmung unterstützt wird.

12. Verfahren nach einem der Ansprüche 1 bis 11, dadurch gekennzeichnet, daß das Ersatzschaufelblatt durch Löten oder Schweißen gesichert wird.

13. Verfahren nach Anspruch 12, dadurch gekennzeichnet, daß das Lotgut vor dem Löten durch Beschichtung auf die Kontaktstellen der formschlüssigen Verbindung aufgebracht wird.

14. Verfahren nach Anspruch 13, dadurch gekennzeichnet, daß die Beschichtung durch PVD-Verfahren aufgebracht wird.

15. Verfahren nach den Ansprüchen 13 oder 14, dadurch gekennzeichnet, daß das aufgebrachte Lotgut für den Lotvorgang eine Preßsitz in der Verbindung erzeugt.
